# EUROPEAN PATENT APPLICATION

(11) **EP 4 079 944 A1**
(43) Date of publication of application: **26.10.2022**
(21) Application number: 20902591.5
(22) Date of filing: 15.10.2020
(51) Int. Cl.: C25D 5/50, C25D 7/06, C23C 22/12, C23C 28/00, C22C 38/04, C22C 38/02, C21D 8/02, C25D 3/12

(54) **HIGH-STRENGTH COLD-ROLLED STEEL SHEET HAVING EXCELLENT PHOSPHATABILITY AND MANUFACTURING METHOD THEREFOR**

(30) Priority: 17.12.2019 KR 20190168775
(71) Applicant: POSCO, Pohang-si, Gyeongsangbuk-do 37859 (KR)
(72) Inventor: KIM, Young-Ha, Gwangyang-si, Jeollanam-do 57807 (KR); KIM, Kwon-Il, Gwangyang-si, Jeollanam-do 57807 (KR); KANG, Dae-Young, Gwangyang-si, Jeollanam-do 57807 (KR)
(74) Representative: Zech, Stefan Markus
(86) International application number: PCT/KR2020/014051
(87) International publication number: WO 2021/125525

(57) **Abstract**

The present invention relates to a cold-rolled steel sheet comprising: a base steel sheet; and a nickel or nickel alloy coating layer formed on the base steel sheet, wherein the adhesion amount of the nickel or nickel alloy is 50mg/m² or less. According to the present invention, provided are a high-strength cold-rolled steel sheet and a manufacturing for manufacturing same. In the high-strength cold-rolled steel sheet, a metal layer is coated on a cold-rolled steel sheet to a thickness of nanometers, followed by annealing, thereby suppressing the formation of oxides of Si, Mn, and the like on the surface of the steel sheet to within a range in which the elution of Fe is not suppressed, and thus the high-strength cold-rolled steel sheet has improved phosphatability.

## Description

### Technical Field

The present disclosure relates to a high-strength cold-rolled steel sheet and a manufacturing for manufacturing the same.

### Background Art

Demand for ultra-high-strength steel sheets is rapidly increasing as a means to respond to stricter automobile fuel efficiency regulations and stricter collision stability regulations in accordance with recently emerging environmental regulations. On the other hand, fuel efficiency improvements are required to achieve carbon emission reduction targets for respective countries, but the weights of automobiles are continuously increasing due to high performance and an increase in various convenience devices, and in order to solve the problems as described above, demand for ultra-high-strength steel sheets is continuously increasing. Accordingly, steelmakers are focusing on the development of high-strength steel sheets such as Dual Phase (DP) steel, Transformation Induced Plasticity (TRIP) steel, Complex Phase (CP) steel, and the like.

In general, a steel sheet for automobiles is subjected to phosphate treatment in advance to secure coating film adhesion during a painting process and then electrodeposition coating is performed. During phosphate treatment, phosphate crystals formed therein greatly affect corrosion resistance and paint adhesion after electrodeposition coating. Since phosphate crystals have to be small and densely formed to have excellent adhesion to a coating film, automobile companies have certain standards for a size of phosphate crystals and an adhesion amount of phosphate, and products may be commercialized only after passing these standards.

In order to increase the strength of the steel sheet of automobiles, it is common to add a large amount of elements such as Si, Mn, Al, and the like, to the steel to increase the strength, but a steel sheet including these elements has a problem in that the elements generate oxides on a surface of the steel sheet during annealing heat treatment, thereby reducing reactivity with phosphate during phosphate treatment. When reactivity between the steel sheet and the phosphate decreases, phosphate crystals on the surface of the steel sheet may become coarse, and the phosphate crystals may not cover an entirety of the steel sheet. In this case, after electrodeposition coating, coating adhesion and corrosion resistance may be reduced.

In order to improve phosphatability of the steel sheet having the large amount of Si, Mn, and Al added thereto as described above, it is necessary to suppress the formation of oxides on the surface of the steel sheet. To this end, the amount of Si and Al added to the steel must be reduced, but in this case, it is difficult to secure a target material.

In this regard, by being preferentially concentrated at grain boundaries through an addition of trace components such as Sb to steel, a technique for improving phosphatability and coating adhesion by suppressing formation of a Si oxide on the surface has been proposed (Patent Document 1). However, there is still a need to develop a technology capable of more reliably preventing diffusion of alloying elements in steel during annealing heat treatment.

### [Prior art Document]

### [Patent Document]

(Patent Document) Japanese Patent Publication No. 6222040

### Summary of Invention

### Technical Problem

An aspect of the present disclosure is to provide a high-strength cold-rolled steel sheet having excellent phosphatability and a method for manufacturing the same. In the high-strength cold-rolled steel sheet, by coating a metal layer on a cold-rolled steel sheet to a thickness of nanometers in a pre-treatment process before annealing heat treatment, to act as a diffusion barrier film for alloy elements in steel during annealing heat treatment and suppressing formation of oxides on a surface of the steel sheet, a high-strength cold-rolled steel sheet having improved phosphatability is provided.

### Solution to Problem

According to an aspect of the present disclosure, a cold-rolled steel sheet is provided. The cold-rolled steel sheet includes a base steel sheet; and a nickel or nickel alloy coating layer formed on the base steel sheet, wherein an adhesion amount of the nickel or nickel alloy coating layer is 50 mg/m² or less (excluding 0%).

The base steel sheet may have a thickness of 1.0 to 1.8 mm.

The base steel sheet may include 0.8 to 3.0% by weight of Si and 1.0 to 3.0% by weight of Mn.

A concentration of an Si element from a surface of the cold-rolled steel sheet to a depth of 0.01 µm may be 0.1 atomic% or less (excluding 0%).

The cold-rolled steel sheet may have corrosion current density of 600 to 800 µA/cm².

When the cold-rolled steel sheet is phosphate, a phosphate coverage according to Equation 1 may be 95% or more. $Phosphate coverage = \left(\begin{matrix}area of phosphate formation \\ region / total area of phosphate treated region\end{matrix}\right) \times 100$

According to another aspect of the present disclosure, a method for manufacturing a cold-rolled steel sheet is provided. The method for manufacturing a cold-rolled steel sheet, includes operations of: performing hot rolling and cold rolling a base steel sheet; forming a metal coating layer having a nickel or nickel alloy adhesion amount of 50mg/m² or less (excluding 0%) on the hot-rolled and cold-rolled base steel sheet; and annealing and heat-treating a steel slab on which the metal coating layer is formed.

The operation of forming the metal coating layer may be performed by an electroplating method.

### Advantageous Effects of Invention

According to the present disclosure, a high-strength cold-rolled steel sheet having improved phosphatability, by suppressing oxides such as Si, Mn, and the like, on a surface of the steel sheet, in a range in which elution of Fe is not suppressed by annealing heat treatment after a metal layer is coated on the cold-rolled steel sheet, to a thickness of nanometers, and a method for manufacturing the same are provided.

### Brief Description of Drawings

FIG. 1 is a schematic diagram schematically illustrating a process in which oxides such as Si and Mn are formed on a surface of a steel sheet when a phosphate treatment is performed after a steel sheet on which a metal coating layer is not formed is heat treated.
FIG. 2 is a schematic diagram schematically illustrating a process in which oxides such as Si and Mn are suppressed on a surface of a steel sheet during a phosphate treatment after a steel sheet on which a metal coating layer is formed is heat treated, according to an embodiment of the present disclosure.

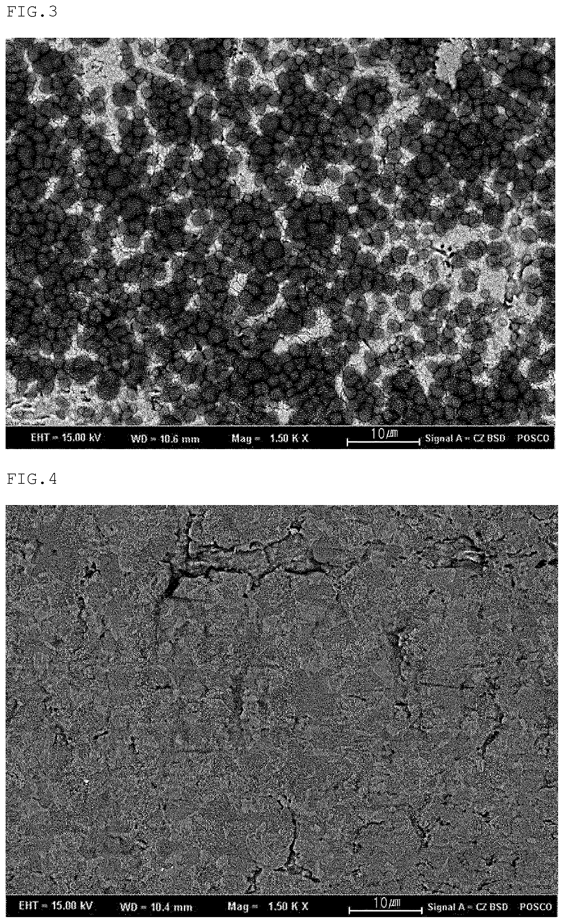

FIG. 3 is a scanning electron microscope (SEM) image of a surface of a steel sheet of Example 3 of the present disclosure.
FIG. 4 is a scanning electron microscope (SEM) image of a surface of a steel sheet on which a metal coating layer is not formed.

### Best Mode for Invention

Hereinafter, preferred embodiments of the present disclosure will be described. The present disclosure may, however, be exemplified in many different forms and should not be construed as being limited to the specific embodiments set forth herein.

The present disclosure relates to a high-strength cold-rolled steel sheet having excellent phosphatability and a method for manufacturing the same.

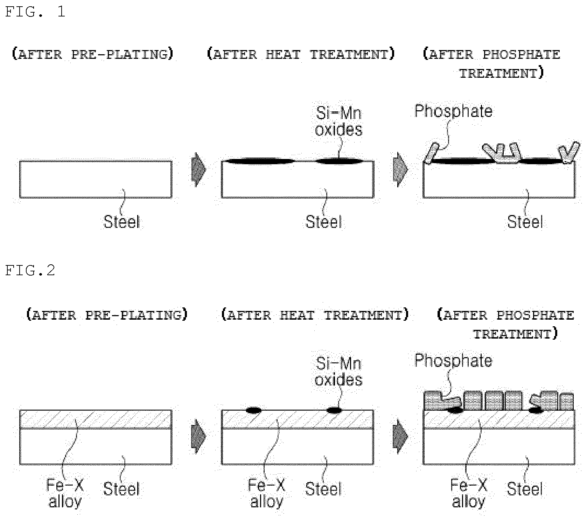

FIG. 1 is a schematic diagram schematically illustrating a process in which oxides such as Si and Mn are formed on a surface of a steel sheet during phosphate treatment after heat treatment is performed on a surface of a conventional cold-rolled steel sheet. Referring to FIG. 1, a large amount of alloying elements such as Si, Mn, and the like, on the steel sheet, diffuse to the surface of the steel sheet during annealing heat treatment to form oxides. When a phosphate treatment is performed on a cold-rolled steel sheet on which a large amount of oxides are formed as described above, an area in which phosphate crystals cover the surface of the steel sheet is reduced by the oxides , so that a phosphate coverage may be lowered. Accordingly, after electrodeposition coating, there is a problem that coating adhesion and corrosion resistance are lowered.

Accordingly, the present inventors have studied a method for improving phosphatability in detail, and when a diffusion barrier film capable of suppressing diffusion of alloying elements such as Si, Mn, and the like, in steel to the surface of the steel sheet during the heat treatment process is formed in a pre-treatment process, prior to the heat treatment, using an electroplating method, and a metal layer having an adhesion amount in a range in which elution of Fe is not suppressed, is coated, excellent phosphatability may be secured, thereby completing the present disclosure.

According to an aspect of the present disclosure, a cold-rolled steel sheet is provided. The cold-rolled steel sheet, includes: a base steel sheet; and a nickel or nickel alloy coating layer formed on the base steel sheet, wherein an adhesion amount of the nickel or nickel alloy coating layer is 50 mg/m² or less. FIG. 2 is a schematic diagram schematically illustrating a process in which oxides such as Si and Mn are suppressed on a surface of a steel sheet when a phosphate treatment is performed after heat treatment is performed on a steel sheet on which a metal coating layer is formed, according to an embodiment of the present disclosure. Hereinafter, the present disclosure will be described in more detail with reference to FIG. 2.

The base steel sheet is not particularly limited, but may include 0.8 to 3.0% by weight of Si and 1.0 to 3.0% of Mn, for example, by weight %, 0.05 to 0.30% of C; 0.05% to 3.0% of Si; 1.0 to 3.0% of Mn; 0.10% or less of P; 0.01% or less of S; 0.01 to 0.1% of Al; 0.008% or less of N; 0.01 to 0.10%, of Sb, and the remainder being Fe and unavoidable impurities.

Si is an important element contributing to the improvement of strength by solid solution strengthening, and serves to improve strength while suppressing deterioration of workability. However, when a Si content exceeds 3.0%, not only an effect of improving the strength is saturated, but there is a problem that the workability is also deteriorated, so the Si content is preferably 0.05 to 3.0%, more preferably 0.1 to 2.0%.

Mn contributes to the improvement of strength by solid solution strengthening, and is an element improving hardenability of an austenite phase and effectively contributes to stabilization of the strength. In order to stably obtain the desired strength, it is necessary to have a Mn content to 1.0% or more. However, if the Mn content exceeds 3.0%, workability is deteriorated, so the Mn content is preferably in a range of 1.0 to 3.0%, and more preferably in a range of 1.5 to 2.5%.

Meanwhile, it is preferable that the base steel sheet has the Mn content of 1.0 to 1.8 mm, in order to be used a steel sheet for automobiles for impact structure members.

A nickel or nickel alloy coating layer may be formed on the base steel sheet which can serve as a diffusion barrier film that can suppress diffusion of elements such as S, Mn, and the like, in steel to the surface of the steel sheet during the heat treatment process. The nickel or nickel alloy coating layer may be formed by an electroplating method, but is not limited thereto.

In addition, metal plating using nickel and nickel alloy increases an elution rate of Fe by forming Local Cell to increase generation and growth of phosphate crystals, so it is preferable to form a nickel and nickel alloy coating layer on the base steel sheet.

An adhesion amount of the nickel or nickel alloy is preferably 50 mg/m² or less (excluding 0%), and more preferably 5 to 50 mg/m². When the adhesion amount thereof exceeds 50 mg/m², it may interfere with surface elution of Fe, so the adhesion amount of nickel or nickel alloy is preferably 50 mg/m² or less.

A concentration of an Si element from a surface of the cold-rolled steel sheet to a depth of 0.01 µm is preferably 0.1% or less (excluding 0%). When the concentration of Si element concentrated on the surface of the steel sheet exceeds 0.1%, as Si-rich oxides in a form of a film are formed on the surface of the steel sheet, by suppressing the elution of Fe in the steel sheet during the phosphate treatment process, phosphatability is deteriorated.

The cold-rolled steel sheet may have corrosion current density of 600 to 800 µA/cm². When the corrosion current density is less than 600 µA/cm², elution of Fe does not occur smoothly, so that formation of a phosphate film becomes difficult or an adhesion amount of the phosphate film decreases, when corrosion current density exceeds 800 µA/cm², since an etching reaction in which the phosphate film precipitation reaction does not occur and only the elution of Fe occurs becomes dominant, phosphatability is deteriorated.

The cold-rolled steel sheet according to the present disclosure may have remarkably improved phosphatability, and accordingly, when the cold-rolled steel sheet is phosphate-treated, a phosphate coverage according to Equation 1 may be 95% or more. $Phosphate coverage = \left(\begin{matrix}area of phosphate formation \\ region / total area of phosphate treated region\end{matrix}\right) \times 100$

According to another aspect of the present disclosure, a method for manufacturing a cold-rolled steel sheet is provided. The method for manufacturing a cold-rolled steel sheet includes, operations of: performing hot rolling and cold rolling on a base steel sheet; forming a metal coating layer having an adhesion amount of nickel or nickel alloy of 50 mg/m² or less (excluding 0%) on the hot-rolled and cold-rolled base steel sheet; and performing an annealing heat-treatment on a steel slab on which the metal coating layer is formed.

The operation of performing hot rolling and cold rolling on a base steel sheet may be performed according to methods and conditions commonly used in the art. For example, the operation may be performed in a method for manufacturing a cold-rolled steel sheet, and in the operation, after a base steel sheet (slab) is heated to a temperature of 1100 to 1300°C, hot rolled and wound at a finish rolling temperature of 800 to 1000°C, and the wound hot-rolled steel sheet is cold rolled.

Thereafter, since the configuration of forming a metal coating layer having an adhesion amount of nickel or nickel alloy of 50 mg/m² or less (excluding 0%) by using an electroplating method has been described above, a detailed description thereof will be omitted.

As described above, according to the present disclosure, a high-strength steel sheet covered by a coating layer having a thickness of nanometers may be formed through a process of degreasing and water-washing the cold-rolled steel sheet in the pretreatment step, and precipitating nickel by electroplating, and a high-strength cold-rolled steel sheet may be manufactured, by implementing ductility through an annealing heat-treatment process.

### Mode for Invention

Hereinafter, the present disclosure will be described in more detail through examples. However, it is necessary to note that the following examples are only intended to illustrate the present disclosure in more detail and are not intended to limit the scope of the present disclosure.

### Example

### Example 1

A slab having a total Mn and Si content of 3.3 wt% was prepared to a thickness of 1.4 mm through hot rolling and cold rolling, and a coating layer having a nickel adhesion amount of 43 mg/m² was formed on a surface thereof through an electroplating process.

Thereafter, after degreasing, water washing and surface adjustment processes were performed, and immersed in a phosphate-zinc solution for about 90 seconds, a phosphate film was formed. In order to observe whether the phosphate film was well formed, an average value of an area fraction (coverage) in which phosphate crystals were formed was calculated by observing a surface of the steel sheet at about 500 times magnification through a scanning electron microscope (Scanning Electron Microscopy).

Meanwhile, in order to measure an amount of a Si alloy element concentrated on the surface of the steel sheet after heat treatment at 800 °C, a profile in a depth direction was measured through GDOES (Glow Discharge Optical Emission Spectroscopy), and an integral value up to a depth of 0.01 µm was described in Table 1.

In addition, in order to check whether a phosphate film is formed on the surface thereof due to promotion of phosphate nucleation due to a nickel coating layer, and to compare a Fe elution rate accompanying the formation of the phosphate film, corrosion current density was calculated through linear polarization resistance measurement and was described in Table 1.

### Example 2

The operation performed in the same manner as in Example 1, except that a nickel adhesion amount is 5 mg/m² and a heat treatment temperature is 804 °C.

### Example 3

The operation performed in the same manner as in Example 1, except that a nickel amount is 16 mg/m² and a heat treatment temperature is 785°C.

### Example 4

The operation performed in the same manner as in Example 1, except that a nickel amount is 25 mg/m² and a heat treatment temperature is 802°C.

### Example 5

The operation performed in the same manner as in Example 1, except that a nickel amount is 12 mg/m² and a heat treatment temperature is 793°C.

### Comparative Example 1

The operation performed in the same manner as in Example 1, except that a nickel amount is 152 mg/m² and a heat treatment temperature is 830°C.

### Comparative Example 2

The operation performed in the same manner as in Example 1, except that a nickel amount is 240 mg/m² and a heat treatment temperature is 815°C.

### Comparative Example 3

The operation performed in the same manner as in Example 1, except that a nickel amount is 365 mg/m² and a heat treatment temperature is 798°C.

### Comparative Example 4

The operation performed in the same manner as in Example 1, except that a nickel amount is 504 mg/m² and a heat treatment temperature is 806°C.

**[Table 1]**

| Classifica tion | Ni adhesion amount (mg/m²) | Heat-treatment temperature (°C) | Si surface concentration integral value (%) | Corrosion current density (µA/cm²) | Phosphate coverage (%) |
|---|---|---|---|---|---|
| Example 1 | 43 | 800 | 0.084 | 677 | 96 |
| Example 2 | 5 | 804 | 0.95 | 723 | 96 |
| Example 3 | 16 | 785 | 0.085 | 699 | 95 |
| Example 4 | 25 | 802 | 0.082 | 684 | 98 |
| Example 5 | 12 | 793 | 0.091 | 705 | 97 |
| Comparativ e Example 1 | 152 | 830 | 0.119 | 523 | 64 |
| Comparativ e Example 2 | 240 | 815 | 0.122 | 505 | 52 |
| Comparativ e Example 3 | 365 | 798 | 0.129 | 479 | 47 |
| Comparativ e Example 4 | 504 | 806 | 0.133 | 438 | 40 |

Referring to Table 1, in Examples 1 to 5 satisfying conditions of the nickel adhesion amount, surface concentration integral value, and corrosion current density defined in the present disclosure, it can be seen that a phosphate coverage is 95% or more, illustrating excellent phosphatability. However, in Comparative Examples 1 to 4 in which the nickel adhesion amount exceeded the conditions of the present disclosure and Comparative Example 5 in which the nickel coating layer was not formed, it can be confirmed that as not only the surface concentration of Si is not suppressed but also elution of Fe is suppressed, the formation of a phosphate film was not performed smoothly, resulting in inferior phosphate coverage and phosphatability.

While example embodiments have been shown and described above, it will be apparent to those skilled in the art that modifications and variations could be made without departing from the scope of the present disclosure as defined by the appended claims.

## Claims

1. A cold-rolled steel sheet, comprising:
a base steel sheet; and
a nickel or nickel alloy coating layer formed on the base steel sheet,
wherein an adhesion amount of the nickel or nickel alloy is 50mg/m² or less.

2. The cold-rolled steel sheet of claim 1, wherein the base steel sheet has a thickness of 1.0 to 1.8 mm.

3. The cold-rolled steel sheet of claim 1, wherein the base steel sheet comprises 0.05 to 3.0% by weight of Si, and 0.1 to 3.0% by weight of Mn.

4. The cold-rolled steel sheet of claim 1, wherein a concentration of an Si element from a surface of the cold-rolled steel sheet to a depth of 0.01 µm is 0.1% or less.

5. The cold-rolled steel sheet of claim 1, wherein the cold-rolled steel sheet has corrosion current density of 600 to 800 µA/cm².

6. The cold-rolled steel sheet of claim 1, wherein, when the cold-rolled steel sheet is phosphate-treated, a phosphate coverage according to Equation 1 is 95% or more, $Phosphate coverage = \left(\begin{matrix}area of phosphate formation \\ region / total area of phosphate treated region\end{matrix}\right) \times 100$

7. A method for manufacturing a cold-rolled steel sheet, comprising operations of:
performing hot rolling and cold rolling on a base steel sheet;
forming a metal coating layer having a nickel or nickel alloy adhesion amount of 50 mg/m² or less on the hot-rolled and cold-rolled base steel sheet; and
heat-treating the base steel sheet on which the metal coating layer is formed.

8. The method for manufacturing a cold-rolled steel sheet of claim 1, wherein the operation of forming the metal coating layer is performed by an electroplating method.
